(19) Europäisches Patentamt / European Patent Office / Office européen des brevets

(11) **EP 2 703 292 B1**

(12) **FASCICULE DE BREVET EUROPEEN**

(45) Date de publication et mention
de la délivrance du brevet:
**28.09.2016 Bulletin 2016/39**

(21) Numéro de dépôt: **13004098.3**

(22) Date de dépôt: **19.08.2013**

(51) Int Cl.:
*B64D 31/00* (2006.01)    *B64C 27/00* (2006.01)
*B64C 27/14* (2006.01)    *B60W 10/08* (2006.01)
*B64D 35/02* (2006.01)    *B64D 35/08* (2006.01)
*B60W 20/00* (2016.01)    *B64C 27/12* (2006.01)
*B64D 27/24* (2006.01)    *B64D 27/02* (2006.01)

(54) **Procédé d'assistance d'un pilote d'un aéronef monomoteur à voilure tournante lors d'une phase de vol en autorotation**

Verfahren zur Unterstützung eines Piloten eines einmotorigen Drehflüglers während einer Autorotationsphase

Method for assisting a pilot of a single-drive rotary wing aircraft during a phase of autorotation

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.08.2012 FR 1202304**

(43) Date de publication de la demande:
**05.03.2014 Bulletin 2014/10**

(73) Titulaire: **Airbus Helicopters
13725 Marignane Cedex (FR)**

(72) Inventeurs:
• **Connaulte, Matthieu
13510 Eguilles (FR)**
• **Mercier, Christian
13580 LA Fare LES Oliviers (FR)**
• **Mariotto, Damien
13410 Lambesc (FR)**

(74) Mandataire: **GPI & Associés
EuroParc de Pichaury
Bâtiment B2 - 1er Etage
1330, rue Guillibert de la Lauzière
13856 Aix-en-Provence Cedex 3 (FR)**

(56) Documents cités:
EP-A1- 2 148 066    EP-A1- 2 327 625
WO-A1-2010/123601    FR-A1- 2 916 418
US-A1- 2009 145 998

**Description**

La présente invention se situe dans le domaine technique des installations motrices des aéronefs monomoteurs à voilure tournante. L'invention concerne un procédé d'assistance d'un pilote d'un aéronef monomoteur à voilure tournante lors d'une phase de vol en autorotation. L'invention concerne également un aéronef monomoteur à voilure tournante comportant un dispositif d'assistance d'un pilote de cet aéronef lors d'une phase de vol en autorotation.

Un aéronef à voilure tournante est classiquement pourvu d'au moins un rotor principal pour assurer sa sustentation voire sa propulsion et généralement d'un rotor arrière pour notamment s'opposer au couple en lacet exercé par le rotor principal sur le fuselage de cet aéronef ou pour aussi permettre de contrôler des mouvements en lacet de cet aéronef.

Afin d'entraîner en rotation le rotor principal et le rotor arrière, l'aéronef comporte une installation motrice qui peut comporter un ou plusieurs moteurs thermiques.

On distingue notamment les aéronefs du type « monomoteur », dont l'installation motrice comporte un unique moteur thermique pour mettre en mouvement le rotor principal et le rotor arrière, et les aéronefs du type « bimoteur », dont l'installation motrice possède deux moteurs thermiques à cet effet.

Il est à noter que l'on entend dans l'ensemble du texte par « moteur thermique » les turbomoteurs ou encore l'ensemble des moteurs à pistons pouvant être utilisés dans une telle installation motrice. L'expression « moteur thermique » est à opposer à l'expression « moteur électrique » qualifiant les moteurs mus par une puissance électrique.

Les aéronefs monomoteurs présentent des avantages non négligeables par rapport aux aéronefs munis d'au moins deux moteurs thermiques. A titre d'exemple, on peut citer un coût raisonnable, des opérations de maintenance réduites, une consommation en carburant relativement faible.

Cependant, ces aéronefs monomoteurs présentent aussi des inconvénients.

En cas d'une avarie sur cet unique moteur thermique, l'installation motrice, et par suite l'aéronef monomoteur, présente des performances dégradées, pouvant aller lors d'une panne de ce moteur thermique jusqu'à l'incapacité d'entraîner le rotor principal et le rotor arrière, ce qui est susceptible d'engendrer une situation dangereuse, augmentant significativement la charge du pilote de l'aéronef. En effet, lors de cette panne, le rotor principal n'étant plus entraîné par l'installation motrice, ce pilote doit tout d'abord entrer dans une phase de vol en autorotation, puis réaliser un atterrissage d'urgence, le rotor principal étant en autorotation.

Une phase de vol en autorotation correspond à une phase de vol particulière dans laquelle l'aéronef vole en descente sans puissance motrice, mais au prix d'un taux de descente assez important. On appelle taux de descente la perte de hauteur de l'aéronef par unité de temps, cette perte de hauteur étant généralement exprimée en pieds par minute. Par exemple, le taux de descente en autorotation pour un aéronef monomoteur est de l'ordre de 1500ft/min.

Dans ce cas, la rotation du rotor principal est engendrée par le flux d'air sans disposer d'une source d'énergie, permettant à l'aéronef de rester manoeuvrable. En effet, le rotor principal, alors entraîné en rotation par le vent relatif, reste le siège d'une portance stabilisée qui, bien qu'inférieure au poids de l'aéronef, reste suffisante pour freiner la descente de l'aéronef et conserver le contrôle de l'aéronef jusqu'à l'atterrissage.

Par contre, le pilote, qui doit appliquer cette procédure particulière de pilotage, doit être très attentif pour d'une part entrer dans un premier temps en phase d'autorotation lors de l'apparition de cette panne et d'autre part dans un deuxième temps exécuter jusqu'à l'atterrissage la poursuite de cette manoeuvre toujours délicate. De plus, la charge du pilote augmente pour manoeuvrer l'aéronef en toute sécurité dans cette phase de vol en autorotation, jusqu'à un atterrissage d'urgence dans une zone appropriée. Cette procédure particulière exige une grande précision et un entraînement adapté et récurrent de la part du pilote de l'aéronef. Il s'agit d'une partie délicate du pilotage des aéronefs notamment monomoteurs et une des raisons principales de la réduction du domaine de vol et de l'emploi de ce type d'aéronef.

En effet, le domaine de vol et les missions autorisées pour les aéronefs monomoteurs sont réduits par les offices de certification délivrant les autorisations de vol. Il est par exemple interdit de survoler avec un aéronef monomoteur une grande ville. De même, les capacités autorisées des aéronefs monomoteurs, telles que la masse maximum embarquée, peuvent être limitées vis-à-vis de leurs capacités réelles.

Une solution envisagée pour améliorer à ce titre les performances des aéronefs monomoteurs est l'utilisation d'une installation motrice « hybride ».

A l'instar du domaine automobile, une installation motrice « hybride » comporte au moins un moteur thermique et au moins un moteur électrique, la puissance mécanique de l'installation motrice hybride pouvant être fournie soit par le moteur thermique seul, soit par le moteur électrique seul, soit par les deux moteurs conjointement. Pour le cas particulier des aéronefs monomoteurs, une installation motrice hybride, comporte un unique moteur thermique et au moins un moteur électrique.

On connaît par exemple les documents FR2952907 et EP2327625 - l'art antérieur le plus proche - qui décrivent une installation motrice hybride mise en oeuvre sur un aéronef monomoteur comportant un unique moteur thermique ainsi qu'un premier moteur électrique lié mécaniquement au rotor principal de l'aéronef et un second moteur électrique lié mécaniquement à son rotor arrière. Cette installation motrice hybride comporte également un ensemble de batteries afin de stocker l'énergie électrique nécessaire à l'alimentation électrique des deux moteurs électriques.

Ces moteurs électriques peuvent intervenir en complément ou bien en remplacement du moteur thermique pour mettre en mouvement les rotors principal et arrière. De plus, ces moteurs électriques peuvent fonctionner en mode générateur pour transformer de la puissance mécanique en puissance électrique ainsi que pour servir de ralentisseur des rotors ou bien du moteur thermique.

On connaît également le document FR2962404 qui décrit l'architecture électrique d'une installation motrice hybride d'un aéronef à voilure tournante. Cette installation motrice comporte au moins un moteur thermique et au moins un moteur électrique ainsi qu'un réseau électrique principal et un réseau électrique auxiliaire. Ce réseau électrique principal est en charge de l'alimentation électrique générale de l'aéronef alors que le réseau électrique auxiliaire est dédié au système d'hybridation de cette installation motrice hybride.

De plus, le document EP2148066 décrit une installation motrice hybride et un procédé de commande d'une telle installation motrice. Cette installation motrice comporte au moins un turbomoteur et au moins un moteur électrique pouvant entrainer conjointement la même boîte de transmission principale de puissance. De fait, la puissance fournie par le moteur électrique vient s'ajouter à la puissance de chaque turbomoteur.

En outre, le document US2009/0145998 qui décrit un aéronef à voilure tournante muni d'une première source de puissance motrice constituée par une turbine à gaz et une seconde source de puissance motrice constituée par une ou plusieurs batteries électriques alimentant un moteur électrique. Ces deux sources de puissance permettent d'entraîner simultanément ou indépendamment un ou plusieurs rotors.

Enfin, le document WO2010/123601 décrit un aéronef à décollage et atterrissage vertical dont le ou les rotors sont entrainés uniquement par plusieurs moteurs électriques. Cet aéronef peut comporter plusieurs moyens de stockage de l'énergie électrique, tel que des batteries des piles à combustible.

Par ailleurs, l'arrière plan technologique comporte notamment le document FR2916418.

Par contre, un des inconvénients majeurs de l'utilisation de moteurs électriques est le stockage de l'énergie électrique nécessaire à leur fonctionnement. En effet, plusieurs solutions de stockage de cette énergie électrique existent, telles que les batteries, les piles thermiques ou les supercapacités, mais chacune a des contraintes propres.

Par exemple, les batteries sont lourdes, voire très lourdes si une grande quantité d'énergie électrique doit être stockée, alors que les supercapacités peuvent fournir une puissance électrique importante, mais pendant un temps très limité. De plus, les piles thermiques sont à usage unique et ont une durée de fonctionnement limitée après activation.

Quelque soit ce moyen de stockage de l'énergie électrique, la quantité d'énergie électrique disponible reste limitée, alors que la masse de ce moyen de stockage de l'énergie électrique peut être importante.

Ainsi, le gain de performance que pourrait permettre d'obtenir l'utilisation d'un ou plusieurs moteurs électriques au sein de l'installation motrice d'un aéronef se heurte à plusieurs limitations liées au stockage de l'énergie électrique. Il faut par exemple trouver un équilibre entre le gain de performance de l'installation motrice hybride et l'augmentation de masse générée par l'utilisation de ces moyens de stockage de l'énergie électrique nécessaire au fonctionnement du ou des moteurs électriques.

La présente invention a alors pour objet de proposer un procédé d'assistance d'un pilote d'un aéronef monomoteur à voilure tournante lors d'une phase de vol en autorotation suite à une panne du moteur thermique de cet aéronef. Ce procédé permet ainsi au pilote de gérer en sécurité cette panne notamment pour atteindre la phase de vol en autorotation et réaliser un atterrissage d'urgence, le rotor principal étant en autorotation.

Selon l'invention, un procédé d'assistance est destiné à un aéronef monomoteur comportant une installation motrice hybride munie d'un unique moteur thermique, d'au moins une machine électrique et d'une boîte de transmission principale de puissance. Cet aéronef comporte également au moins un moyen de stockage d'énergie électrique alimentant la machine électrique et au moins un rotor principal entrainé au cours d'un vol à une vitesse nominale de rotation par cette installation motrice hybride.

L'expression « vitesse de rotation » du rotor principal est usuellement utilisée par l'homme du métier pour désigner la fréquence de rotation du rotor principal d'un aéronef. Cette vitesse de rotation du rotor principal est alors exprimée en radians par seconde (rad/s) ou bien en tours par minute (tr/mn).

De plus, au cours d'un vol, le rotor principal d'un aéronef tourne à une vitesse nominale de rotation, définie par le constructeur de l'aéronef, une légère variation autour de cette vitesse nominale de rotation étant toutefois possible.

Par la suite, par soucis de simplification, on désignera par « vitesse de rotation » du rotor principal la vitesse instantanée de rotation du rotor principal, sachant au cours d'un vol, cette vitesse instantanée de rotation est égale à la vitesse nominale de rotation.

Une machine électrique est par défaut une machine réversible. Elle peut donc avoir un fonctionnement en mode moteur, c'est-à-dire tel que la machine électrique transforme une puissance électrique en une puissance mécanique et un fonctionnement en mode générateur, c'est-à-dire tel que la machine électrique transforme une puissance mécanique en une puissance électrique. Par ailleurs, cette machine électrique peut par exemple être un moteur sans balai dénommé « brushless » en langue anglaise.

Cette machine électrique peut être placée en différentes positions au sein de l'installation motrice hybride selon le document FR2952907. Par exemple, elle peut être liée à la boîte de transmission principale de puissance, au moteur thermique ou bien directement au rotor principal de l'aéronef.

Ce procédé est remarquable en ce que durant une étape de surveillance, on mesure pendant un vol un paramètre de surveillance de l'aéronef afin de détecter une éventuelle panne du moteur thermique. Puis lorsqu'une panne moteur est détectée, on commande la machine électrique pour fournir une puissance auxiliaire au rotor principal, permettant ainsi d'assister le pilote de l'aéronef pour manoeuvrer l'aéronef en sécurité lors de la phase de vol en autorotation consécutive à cette panne du moteur thermique.

Lors d'une panne du moteur thermique entraînant une perte totale de la motricité du rotor principal, l'aéronef monomoteur doit entrer sous les commandes de son pilote dans une phase de vol en autorotation, cette phase de vol en autorotation étant une phase de vol en descente sans puissance motrice, l'aéronef restant manoeuvrable. Cette entrée en phase de vol en autorotation doit être faite dans un délai très court, de l'ordre de 1 à 2 secondes après l'apparition de la panne du moteur thermique et selon une procédure particulière visant à maintenir le rotor à une vitesse de rotation prédéterminée. Sans action rapide du pilote de l'aéronef suite à cette panne, la vitesse de rotation du rotor principal de l'aéronef décroît très rapidement jusqu'au décrochage de ce rotor principal, c'est-à-dire que le rotor principal n'assure plus aucune sustentation, et l'aéronef chute alors sans possibilité de manoeuvre jusqu'à l'accident.

Le procédé vise tout d'abord à assister le pilote dans la réalisation de cette entrée en phase de vol en autorotation, par la fourniture d'une puissance auxiliaire au rotor principal.

Au moment de la panne de ce moteur thermique, le rotor principal n'est plus entraîné par le moteur thermique et la puissance motrice chute jusqu'à devenir nulle. La puissance motrice du rotor principal peut être le paramètre de surveillance représentatif de la panne du moteur thermique. La rotation du rotor principal subit alors une décélération importante, et par suite sa vitesse de rotation diminue progressivement. L'art du pilote est alors d'éviter cette chute de la vitesse de rotation du rotor principal et de chercher à atteindre une vitesse de rotation du rotor principal permettant d'avoir un taux de descente minimum.

Après détection de cette panne, le procédé commande la machine électrique en mode de fonctionnement moteur, c'est-à-dire de façon que la machine électrique peut fournir une puissance mécanique auxiliaire au rotor principal. Cette fourniture de puissance auxiliaire permet alors de réduire la décélération de ce rotor principal. La chute de la vitesse de rotation du rotor principal est ainsi moins rapide, permettant au pilote une plus grande souplesse dans la manoeuvre de récupération de cette vitesse de rotation du rotor principal. L'entrée en phase de vol en autorotation de l'aéronef est alors plus rapide et aisée pour le pilote. De plus, cette fourniture de puissance auxiliaire permet également d'augmenter le temps disponible pour l'entrée en phase de vol en autorotation de quelques secondes, par exemple de 1 à 2 secondes.

Un autre instant critique suite à cette panne du moteur thermique est l'atterrissage de l'aéronef. En effet, le rotor principal étant en autorotation, cet atterrissage doit lui aussi être réalisé selon une mode opératoire spécifique et délicat à mettre en oeuvre par les pilotes, afin d'éviter notamment un contact très brutal avec le sol. Plus précisément, il s'agit en fin de descente stabilisée de cabrer l'aéronef pour réduire la vitesse d'avancement de l'aéronef et sa vitesse de descente, puis de remettre à plat cet aéronef de manière à toucher le sol avec une assiette sensiblement nulle.

Le procédé vise ainsi à assister le pilote dans la réalisation de cet atterrissage, par la fourniture d'une puissance auxiliaire au rotor principal.

Afin de réduire, puis de stopper la vitesse de descente et la vitesse d'avancement de l'aéronef, la manoeuvre de remise à plat doit être accompagnée d'une augmentation du pas collectif des pales du rotor principal réalisée par le pilote, qui en fournissant une sustentation très provisoire provoque une chute très rapide de la vitesse de rotation de ce rotor principal. Dans le court instant de cette remise à plat et de la mise de pas collectif, la puissance nécessaire au vol chute et la seule source d'énergie pour le rotor principal est sa propre énergie cinétique de rotation. Le procédé détecte alors cette chute de puissance du rotor principal, par l'intermédiaire de cette réduction de la vitesse de rotation du rotor principal, et commande alors la machine électrique en mode de fonctionnement moteur pour fournir une puissance mécanique auxiliaire au rotor principal.

Cette fourniture d'une puissance auxiliaire a pour effet d'augmenter la quantité d'énergie disponible au niveau de ce rotor principal, et par suite la quantité d'énergie disponible pour réduire la vitesse de descente et la vitesse d'avancement de l'aéronef. Le pilote peut ainsi disposer d'une énergie supplémentaire pour effectuer un atterrissage sans impact brutal sur le sol et en limitant le glissé de l'aéronef sur le sol. En effet, le pilote se doit de réduire en priorité la vitesse de descente de l'aéronef afin de réaliser un atterrissage sans impact, un glissé de l'aéronef lors de cet atterrissage, dû à une vitesse d'avancement non nulle, étant moins critique.

Enfin, lors de la descente en autorotation, le pilote peut aussi demander de la sustentation au rotor principal afin de manoeuvrer l'aéronef, pour notamment éviter un obstacle ou bien atteindre un terrain d'atterrissage approprié. Cette demande de sustentation au niveau du rotor principal s'accompagne encore d'une réduction de la puissance disponible au rotor principal, et par suite encore de sa vitesse de rotation. Le procédé détecte alors cette réduction de la vitesse de rotation du rotor principal, puis commande la machine électrique en mode de fonctionnement moteur pour fournir une puissance mécanique auxiliaire au rotor principal. De fait, cette puissance auxiliaire fournie au rotor principal permet la réalisation de la manoeuvre demandée par le pilote et de maintenir la vitesse de rotation du rotor principal à la valeur requise en phase d'autorotation, permettant également de réduire le taux de descente de l'aéronef.

Par contre, lorsque l'aéronef est au sol et le rotor principal tournant au ralenti, c'est-à-dire à une vitesse de rotation inférieure à la vitesse nominale, il convient ne pas déclencher le procédé selon l'invention au sol. En effet, cette vitesse de rotation au ralenti pourrait être identifiée comme une baisse de puissance du rotor principal et par suite comme une panne du moteur thermique. Pour éliminer cette possibilité, il est alors intéressant d'utiliser une première information, fournie par un moyen d'information présent dans l'aéronef, indiquant que l'aéronef a décollé, afin d'être sûr que le rotor principal a atteint la vitesse de rotation nominale et pour permettre l'exécution du procédé si nécessaire. Cette première information peut ainsi être utilisée pour activer le procédé selon l'invention, le moyen d'information étant par exemple une poignée tournante, comme celle d'une régulation de la puissance éventuellement présente sur l'aéronef et activée uniquement en vol ou tout autre moyen de l'avionique de cet aéronef.

De plus, il convient ne pas déclencher le procédé selon l'invention lors de phases de vol particulières demandées par le pilote de l'aéronef et exigeantes en termes de charges aérodynamiques. En effet, lorsque le pilote demande une forte augmentation du pas collectif des pales du rotor principal, une baisse de la vitesse de rotation du rotor principal peut intervenir sous l'effet de ces charges aérodynamiques avant que le moteur thermique ne puisse rétablir la vitesse nominale de rotation de ce rotor principal.

Afin d'éviter que cette baisse temporaire de la vitesse de rotation du rotor principal consécutive à cette demande soit interprétée comme une baisse de puissance du rotor principal, et par suite déclenche l'exécution du procédé selon l'invention, il est alors intéressant d'utiliser une seconde information indiquant cette forte demande de pas collectif faite par le pilote. Cette seconde information peut ainsi être utilisée pour désactiver le procédé selon l'invention et par exemple être fournie par la commande de pas collectif, lorsqu'elle est fortement sollicitée par le pilote de l'aéronef.

Par contre, une fois le procédé selon l'invention enclenché, c'est-à-dire qu'une panne moteur a été détectée, cette seconde information est sans effet sur le procédé et la machine électrique fournit la puissance auxiliaire au rotor principal selon les manoeuvres demandées par le pilote.

Le procédé selon l'invention permet ainsi, lors de la panne du moteur thermique d'un aéronef monomoteur en vol, d'assister le pilote pour entrer en phase de vol en autorotation, pour réaliser certaines manoeuvres lors de ce vol en autorotation et pour atterrir grâce à la fourniture automatique d'une puissance auxiliaire aux moments opportuns, c'est-à-dire quand le pilotage de l'aéronef le nécessite.

Par ailleurs, la fourniture de cette puissance auxiliaire au rotor principal lors de la panne du moteur thermique de l'aéronef peut permettre d'une part l'augmentation de la masse maximum au décollage d'un aéronef monomoteur et d'autre part l'augmentation du domaine de vol de cet aéronef.

En effet, la masse maximum au décollage d'un aéronef monomoteur peut être limitée par les performances de cet aéronef en phase de vol en autorotation, notamment pour prendre en compte le cas d'une panne moteur pendant la phase de décollage.

De la sorte, la fourniture de cette puissance auxiliaire améliorant les performances de cet aéronef en phase de vol en autorotation peut aussi permettre l'augmentation de sa masse maximum au décollage.

De plus, le domaine de vol d'un aéronef est, entre autres, caractérisé par un diagramme dénommé « diagramme hauteur-vitesse », qui détermine la vitesse horizontale minimum que doit respecter un aéronef en fonction de sa hauteur-sol, et une zone de ce diagramme est à éviter pour laquelle la phase de vol en autorotation ne peut pas être exécutée jusqu'à un atterrissage en sécurité.

On appelle « hauteur-sol », la position de l'aéronef par rapport au sol suivant un axe vertical. Ce terme « hauteur-sol » est plus approprié que l'altitude qui définie en fait la position de l'aéronef suivant cet axe vertical, mais par rapport au niveau de la mer. Ainsi, la hauteur-sol définit l'espace disponible entre l'aéronef et le sol, nécessaire par exemple pour réaliser l'entrée en phase de vol en autorotation et l'atterrissage suite à une panne de moteur thermique.

Par suite, la fourniture de cette puissance auxiliaire améliorant les performances de cet aéronef en phase de vol en autorotation permet de réduire la zone de ce diagramme hauteur-vitesse à éviter, augmentant ainsi le domaine de vol de l'aéronef.

Le domaine de vol d'un aéronef est également caractérisé par son taux de descente en phase de vol en autorotation. Ce taux de descente permet alors de définir la distance réalisable par cet aéronef en phase de vol en autorotation. Ainsi, la fourniture de la puissance auxiliaire au rotor principal peut permettre de réduire ce taux de descente de l'aéronef. Par suite, la distance réalisable par l'aéronef en phase de vol en autorotation peut être augmentée.

De la sorte, le domaine de vol d'un aéronef monomoteur pouvant être étendu et la phase de vol en autorotation étant sécurisée par l'utilisation du procédé selon l'invention, les restrictions liées à cet aéronef monomoteur peuvent être réduites. Par exemple, sa masse maximum embarquée peut être augmentée. De même, la distance réalisable par l'aéronef en phase de vol en autorotation étant augmentée, le pilote de l'aéronef peut plus aisément trouver un terrain d'atterrissage approprié, et par suite être autoriser à survoler les grandes villes.

L'augmentation de ce domaine de vol est directement liée à la durée pendant laquelle cette puissance auxiliaire peut être fournie au rotor principal. Pour l'entrée en phase de vol en autorotation, la durée d'utilisation de cette puissance auxiliaire est de l'ordre de quelques secondes avant établissement de l'autorotation du rotor principal. De même, pour la réalisation de l'atterrissage en autorotation, la durée d'utilisation de cette puissance auxiliaire est de l'ordre de quelques secondes.

Ainsi, le procédé est activé au moins deux fois, suite à la panne du moteur thermique de l'aéronef jusqu'à son atterrissage, pendant une durée de l'ordre de 15 secondes pour réaliser l'entrée en phase de vol en autorotation et l'atterrissage. Le pilote de l'aéronef peut également utiliser une partie de la puissance auxiliaire disponible pour éviter un obstacle ou augmenter la distance réalisable dans cette phase de vol en autorotation.

Avantageusement, on affiche selon le procédé de l'invention sur un moyen d'affichage de l'aéronef une information relative à la puissance auxiliaire disponible. Ainsi, le pilote de l'aéronef connait en permanence le niveau de puissance auxiliaire disponible et il peut gérer cette puissance auxiliaire disponible pour d'une part conserver la puissance auxiliaire qu'il souhaite pour réaliser l'atterrissage et d'autre part pour éviter un obstacle ou bien augmenter la distance réalisable dans cette phase de vol en autorotation afin d'atteindre un terrain d'atterrissage approprié.

Cette information peut par exemple être le temps d'utilisation possible de cette puissance auxiliaire à son niveau maximum, ce temps étant déterminé en fonction de l'énergie électrique disponible dans le moyen de stockage pour alimenter la machine électrique.

Selon ce procédé, on affiche également sur ce moyen d'affichage une indication informant si le procédé est opérationnel. Le procédé est opérationnel lorsqu'il est capable de détecter une panne du moteur thermique et de fournir la puissance auxiliaire requise au rotor principal.

Tout d'abord, ce procédé ne peut être opérationnel qu'en vol comme vu ci-dessus. De plus, un interrupteur présent dans l'aéronef peut permettre au pilote de rendre le procédé opérationnel ou non. Ce procédé peut également ne pas être opérationnel suite à une avarie ou bien par manque d'énergie électrique dans le moyen de stockage. Cette indication informant si le procédé est opérationnel peut être une couleur de l'information de la puissance auxiliaire disponible, par exemple vert quand le procédé est opérationnel et rouge quand le procédé n'est pas opérationnel. Ainsi, lorsque toute la puissance auxiliaire a été consommée, le moyen d'affichage affiche un temps d'utilisation possible de cette puissance auxiliaire de « 0 seconde » en rouge.

Par ailleurs, la puissance auxiliaire disponible est fonction de la quantité d'énergie disponible dans le moyen de stockage présent dans l'aéronef. Ainsi, plus le moyen de stockage est important, plus la puissance auxiliaire disponible est importante, et par suite plus l'augmentation du domaine de vol est importante. De plus, la puissance maximum que peut fournir la machine électrique a également un effet sur l'augmentation de ce domaine de vol.

Cependant, la machine électrique et le moyen de stockage de l'énergie électrique peuvent rapidement atteindre des masses importantes qui peuvent être préjudiciables aux performances de l'aéronef. Il est alors nécessaire de limiter ces masses afin d'obtenir un compromis entre la fourniture de cette puissance auxiliaire selon le procédé de l'invention et l'augmentation de la masse de l'aéronef.

Ainsi, la puissance auxiliaire maximum nécessaire pour gérer en toute sécurité la panne du moteur thermique de l'aéronef monomoteur, c'est à dire la puissance maximum que peut fournir la machine électrique, est de l'ordre de 15 à 30% d'une puissance maximum du moteur thermique de l'aéronef.

De plus, cette puissance auxiliaire est nécessaire pendant une durée de l'ordre de 15 secondes pour assurer l'entrée en phase de vol en autorotation et l'atterrissage de l'aéronef en toute sécurité. De fait, le moyen de stockage peut être dimensionné pour assurer la fourniture de cette puissance auxiliaire à sa valeur maximum pendant uniquement cette durée de l'ordre de 15 secondes afin de minimiser sa masse.

Le moyen de stockage peut par exemple comporter, au moins une supercapacité, qui est un condensateur capable de fournir une puissance importante dans un temps limité, une pile thermique qui nécessite un apport de chaleur pour fournir une puissance, ou bien une batterie rechargeable.

Si ce moyen de stockage dispose d'une énergie électrique supérieure au besoin minimum de la gestion de la panne du moteur thermique, alors la machine électrique peut également fournir une puissance auxiliaire pendant le vol de l'aéronef afin d'augmenter la puissance de l'installation motrice, par addition de cette puissance auxiliaire à la puissance du moteur thermique. Dans ce but, le pilote dispose d'une commande dédiée pour activer cette puissance auxiliaire, tel qu'un interrupteur, et il peut alors utiliser cette puissance auxiliaire lors de phases de vol particulières et exigeantes, telles que le décollage à masse embarquée maximum ou bien certaines manoeuvres de virage sous fortes charges aérodynamiques. Cette puissance auxiliaire disponible en vol peut également permettre d'augmenter le domaine de vol de l'aéronef monomoteur.

Par ailleurs, la machine électrique peut être utilisée en mode générateur pour transformer une énergie mécanique fournie par le moteur thermique ou bien par le rotor principal en énergie électrique.

Par suite, le moyen de stockage de l'énergie électrique comportant au moins un moyen rechargeable de stockage de cette énergie électrique destiné à alimenter électriquement la machine électrique lorsqu'elle fonctionne en mode moteur, la machine électrique en mode générateur fournit une énergie électrique afin de charger chaque moyen rechargeable de stockage.

De plus, au moins un moyen rechargeable de stockage peut également être destiné à l'alimentation électrique générale de l'aéronef, notamment avant le démarrage de son moteur thermique, pour le démarrage de ce moteur thermique, et en cas d'urgence, lorsque le générateur principal d'électricité de l'aéronef ne fournit plus assez d'énergie, aux équipements avioniques permettant ainsi la poursuite du vol en toute sécurité. Chaque moyen rechargeable de stockage remplace alors au moins partiellement ou en totalité les batteries utilisées traditionnellement pour l'alimentation électrique générale de l'aéronef alimentant notamment les instruments et les appareils électriques de l'aéronef.

De la sorte, la machine électrique en mode générateur peut fournir l'énergie électrique nécessaire au fonctionnement du réseau électrique de l'aéronef, au travers par exemple d'un convertisseur de tension, remplaçant au moins partiellement ou en totalité le générateur principal ou le démarreur-générateur présent traditionnellement dans l'aéronef, le démarreur-générateur pouvant se limiter alors à un simple démarreur.

Avantageusement, l'augmentation de masse due à la machine électrique et au moyen de stockage est en partie compensée par la suppression des batteries et du générateur principal présents traditionnellement dans l'aéronef.

Dans le cas où le moyen de stockage est utilisé à la fois pour l'alimentation électrique de la machine électrique et pour l'alimentation électrique générale de l'aéronef, la totalité de l'énergie électrique disponible dans ce moyen de stockage ne peut pas être utilisée pour alimenter la machine électrique. En effet, en vol d'urgence, suite à une panne du moteur thermique ou bien du générateur principal d'électricité, une partie de cette énergie électrique est destinée à alimenter entre autres les instruments de vol.

De fait, une partie de l'énergie électrique disponible dans ce moyen de stockage est réservée pour alimenter électriquement ces instruments de vol, alors que le reste de l'énergie électrique disponible peut être fournie à la machine électrique pour fournir une puissance auxiliaire au rotor principal.

Par ailleurs, le procédé selon l'invention doit détecter rapidement l'instant de la panne du moteur thermique de l'aéronef afin de fournir au plus tôt la puissance auxiliaire au rotor principal.

Cette panne se caractérise par une chute de la puissance du rotor principal, qui n'est plus entrainé par le moteur thermique, et par suite par la chute de sa vitesse de rotation. On peut donc mesurer la vitesse de rotation du rotor principal pour évaluer cette chute de sa puissance qui est représentative de la panne du moteur thermique et détecter ainsi cette panne, par exemple dès que la vitesse de rotation du rotor principal atteint une première valeur prédéterminée, inférieure à la vitesse nominale du rotor principal.

Cependant, cette chute de la vitesse de rotation du rotor principal est réalisée avec une forte décélération de la rotation du rotor principal, qui peut être détectée avant que cette vitesse de rotation atteigne cette première valeur prédéterminée. De fait, afin d'être plus réactif, on peut détecter cette panne du moteur thermique en fonction de la décélération de la rotation du rotor principal et de cette vitesse de rotation.

Les aéronefs disposent traditionnellement d'un premier moyen de mesure de la vitesse de rotation du rotor principal. On peut alors déterminer la dérivée de la vitesse de rotation du rotor principal, c'est-à-dire la décélération du rotor principal, par un algorithme simple et connu.

Selon un mode de réalisation préféré de l'invention, on considère que le moteur thermique est en panne lorsqu'une première puissance de contrôle $W_C$ est positive, cette première puissance de contrôle $W_C$ étant obtenue selon la première relation suivante :

$$W_C = \frac{W_{\max}}{Nr_{t1} - Nr_{t2}}\left( Nr + k\frac{dNr}{dt} - Nr_{t2} \right),$$ $W_{max}$ étant la puissance maximum que peut fournir la machine électrique, $Nr$ étant la vitesse de rotation du rotor principal, $\dfrac{dNr}{dt}$ étant la dérivée de la vitesse de rotation $Nr$,

$Nr_{t1}$, $Nr_{t2}$ et $k$ étant des coefficients positifs qui dépendent de l'aéronef.

Le coefficient $Nr_{t1}$ est inférieur au coefficient $Nr_{t2}$. De fait, la différence $(Nr_{t1} - Nr_{t2})$ est en permanence négative.

De plus, $Nr_{t2}$ correspond à la première valeur prédéterminée de la vitesse de rotation du rotor principal en dessous de laquelle la panne est détectée. Ainsi dès que la vitesse de rotation du rotor principal Nr est inférieure à cette première valeur prédéterminée $Nr_{t2}$, la différence $(Nr-Nr_{t2})$ est négative. Lors d'une panne, le rotor est en phase de décélération, la dérivée $\dfrac{dNr}{dt}$ de sa vitesse de rotation est donc négative.

De fait, l'expression $\left( Nr + k\dfrac{dNr}{dt} - Nr_{t2} \right)$ est négative, et par suite, la première puissance de contrôle

$W_C$ est positive, suite à une panne quand la vitesse de rotation du rotor principal $Nr$ est inférieure à cette première valeur prédéterminée $Nr_{t2}$.

Par ailleurs, à l'apparition de la panne, le rotor principal subit une forte décélération, la valeur absolue de la dérivée

$\dfrac{dNr}{dt}$ est donc importante. De fait, l'expression $\left( Nr + k \dfrac{dNr}{dt} - Nr_{t2} \right)$ peut être négative, et par suite, la première puissance de contrôle $W_C$ positive à l'apparition d'une panne alors que la vitesse de rotation du rotor principal Nr est encore supérieure à cette première valeur prédéterminée $Nr_{t2}$. Ceci permet ainsi de détecter une panne plus rapidement.

Le coefficient $k$, qui est un coefficient de pondération de la décélération de la rotation du rotor principal, permet ainsi d'augmenter ou de diminuer l'effet de la dérivée de la vitesse de rotation du rotor principal sur cette détection de la panne. Ce coefficient $k$ permet alors une pondération de l'anticipation de la panne moteur.

Cependant, lorsque le rotor est en phase d'accélération, par exemple, suite à un redémarrage du moteur thermique ou bien suite à la fourniture d'une puissance auxiliaire par la machine électrique, la dérivée $\dfrac{dNr}{dt}$ est positive.

Dans ce cas, la première puissance de contrôle $W_C$ peut être négative alors que la vitesse de rotation du rotor principal Nr est toujours inférieure à cette première valeur prédéterminée $Nr_{t2}$. En effet, l'accélération du rotor principal est alors suffisante pour permettre au rotor principal d'atteindre une vitesse supérieure à cette première valeur prédéterminée $Nr_{t2}$.

Lorsqu'une panne est détectée, la machine électrique fournit alors une puissance auxiliaire $W_e$ comprise entre une valeur nulle et la puissance maximum $W_{max}$ que peut fournir cette machine électrique. La puissance auxiliaire $W_e$ est en fait égale à la première puissance de contrôle $W_C$ lorsque cette première puissance de contrôle $W_C$ est inférieure à la puissance maximum $W_{max}$ et la puissance auxiliaire $W_e$ est égale à la puissance maximum $W_{max}$ lorsque cette première puissance de contrôle $W_C$ est supérieure ou égale à la puissance maximum $W_{max}$.

L'utilisation des deux coefficients $Nr_{t1}$ et $Nr_{t2}$ permet ainsi d'avoir une augmentation progressive de la puissance auxiliaire $W_e$, évitant ainsi un passage brutal d'une valeur nulle à une valeur maximum de la puissance auxiliaire qui se produirait si on utilisait uniquement le coefficient $Nr_{t2}$.

La machine électrique doit alors fournir une puissance auxiliaire $W_e$ au rotor principal dès que la panne est détectée et lorsque le pilote le sollicite après apparition de la panne et jusqu'à l'atterrissage de l'aéronef, de sorte que la puissance auxiliaire $W_e$ est fournie au rotor principal à tout moment suivant la panne du moteur thermique, pour l'entrée dans la phase de vol en autorotation, pour l'atterrissage de l'aéronef ainsi que pour éviter un obstacle ou bien augmenter la distance réalisable par l'aéronef. Concernant l'entrée en phase de vol en autorotation, la forte décélération de la rotation du rotor principal, à l'instant de la panne est essentiellement à l'origine de la fourniture de la puissance auxiliaire au rotor principal. Dans les autres cas, la baisse de la vitesse de rotation de ce rotor principal, la décélération étant alors plus faible est à l'origine de la fourniture de cette puissance auxiliaire $W_e$.

Par ailleurs, suite à la fourniture de cette puissance auxiliaire $W_e$, la vitesse du rotor principal augmente et la première puissance de contrôle $W_C$ peut être négative. Dans ce cas, la puissance auxiliaire $W_e$ fournie au rotor principal est alors nulle, le rotor principal ayant atteint une vitesse de rotation suffisante pour ne plus avoir besoin de cette puissance auxiliaire $W_e$.

On rappelle qu'un rotor principal d'un aéronef en vol a une vitesse nominale de rotation, prédéterminée par le constructeur de l'aéronef. Le coefficient $Nr_{t1}$ est alors compris entre 82% et 88% de cette vitesse nominale de rotation alors que le coefficient $Nr_{t2}$ est compris entre 93% et 98% de cette vitesse nominale de rotation, le coefficient $k$ pouvant varier de 1 à 6.

Selon une variante de ce mode de réalisation préféré du procédé, on détecte une panne du moteur thermique uniquement en fonction de la vitesse de rotation du rotor principal. Dans ce cas, la première puissance de contrôle $W_C$ est toujours obtenue selon la première relation, le coefficient de pondération $k$ ayant une valeur nulle. La réactivité de cette détection de la panne est alors dégradée, mais sa fiabilité peut être améliorée, aucun calcul de dérivée n'étant nécessaire.

Selon une autre variante de ce mode de réalisation préféré du procédé, le moteur thermique de l'aéronef est un turbomoteur dont une vitesse instantanée de rotation d'une turbine de compression est obtenue par l'intermédiaire d'un second moyen de mesure de l'aéronef. Dans ce turbomoteur, la turbine de compression, qui permet de comprimer l'air d'admission, n'est pas liée mécaniquement à la turbine libre qui entraîne le rotor principal par l'intermédiaire de la boîte de transmission principale de puissance. De fait, cette turbine de compression n'est pas liée mécaniquement au rotor principal. De fait, lors d'une panne du turbomoteur, la vitesse instantanée de rotation de cette turbine de compression chute plus vite que la vitesse instantanée de rotation du rotor principal. Par suite, on détecte plus rapidement la panne du turbomoteur en utilisant la décélération de cette turbine de compression au lieu de la décélération de la rotation du rotor principal.

EP 2 703 292 B1

On considère alors que le moteur thermique est en panne lorsqu'une seconde puissance de contrôle $W_{CT}$ est positive, cette seconde puissance de contrôle $W_{CT}$ étant obtenue selon la seconde relation suivante :

$$W_{CT} = \frac{W_{max}}{NG_{t1} - NG_{t2}}\left(NG + k'\frac{dNG}{dt} - NG_{t2}\right),$$ $W_{max}$ étant la puissance maximum que peut fournir cette machine électrique, NG étant la vitesse instantanée de rotation de la turbine de compression, $\dfrac{dNG}{dt}$ étant

la dérivée de la vitesse instantanée de rotation de la turbine de compression, $NG_{t1}$, $NG_{t2}$ et $k'$ étant des coefficients qui dépendent de l'aéronef. Le coefficient $NG_{t1}$ est inférieur à $NG_{t2}$, qui correspond à une seconde valeur prédéterminée de la vitesse instantanée de rotation cette turbine de compression en dessous de laquelle la panne est détectée, et le coefficient k' est un coefficient de pondération de la décélération de la rotation de cette turbine de compression.

Comme pour le mode de réalisation préféré de l'invention, la seconde puissance de contrôle $W_{CT}$ est positive principalement lors d'une forte décélération de la turbine de compression ou bien lorsque sa vitesse est inférieure au coefficient $NG_{t2}$.

Ainsi, lorsqu'une panne est détectée, la machine électrique fournit alors une puissance auxiliaire $W_e$ comprise entre une valeur nulle et la puissance maximum $W_{max}$. Comme précédemment, la puissance auxiliaire $W_e$ est en fait égale à la seconde puissance de contrôle $W_{CT}$ lorsque cette seconde puissance de contrôle $W_{CT}$ est inférieure à la puissance maximum $W_{max}$ et la puissance auxiliaire $W_e$ est égale à la puissance maximum $W_{max}$ lorsque cette seconde puissance de contrôle $W_{CT}$ est supérieure ou égale à la puissance maximum $W_{max}$.

Par contre, on commande la machine électrique pour fournir une puissance auxiliaire $W_e$ égale à la seconde puissance de contrôle $W_{CT}$ que dans les premiers instants de la panne, pour assister le pilote dans l'entrée dans la phase de vol en autorotation. En effet, la vitesse de cette turbine de compression ne fait que diminuer suite à la panne et l'entrée en phase de vol en autorotation n'a aucun effet sur elle. Pour les autres cas où la puissance auxiliaire $W_e$ de la machine électrique peut être utile, c'est à dire l'atterrissage de l'aéronef en autorotation et l'évitement d'un obstacle ou bien l'augmentation de la distance réalisable par l'aéronef, on commande alors la machine électrique pour fournir une puissance auxiliaire $W_e$ égale à la première puissance de contrôle $W_C$.

Par ailleurs, le paramètre de surveillance de l'aéronef permettant de détecter une panne du moteur thermique peut également être un couple en sortie de ce moteur thermique obtenu par l'intermédiaire d'un troisième moyen de mesure tel un couplemètre. En effet, lors d'une panne du moteur thermique, la puissance motrice de ce moteur thermique chute rapidement, de même que son couple. De fait, on détecte cette panne du moteur thermique dès que son couple est inférieur à une troisième valeur prédéterminée. On commande alors la machine électrique pour fournir une puissance auxiliaire $W_e$ égale à la première puissance de contrôle $W_C$.

Dans le cas où le moteur thermique de l'aéronef est un turbomoteur comportant une turbine de compression, le paramètre de surveillance peut aussi être la vitesse de cette turbine de compression. En effet, cette turbine de compression n'étant pas liée mécaniquement à la turbine libre de ce moteur thermique, sa vitesse instantanée de rotation chute rapidement dès qu'une panne a lieu, alors que la vitesse instantanée de rotation de la boîte de transmission principale de puissance, liée mécaniquement à la turbine libre de ce moteur et au rotor principal, chute moins vite.

De fait, on détecte cette panne du moteur thermique dès que cette vitesse instantanée de rotation de la turbine de compression est inférieure à une quatrième valeur prédéterminée. La vitesse instantanée de rotation de la turbine de compression est obtenue par l'intermédiaire du second moyen de mesure. Là encore, on commande alors la machine électrique pour fournir une puissance auxiliaire $W_e$ égale à la première puissance de contrôle $W_C$.

Avantageusement, chaque moyen de mesure utilisé pour mesurer le paramètre de surveillance peut fournir une information peu bruitée et finement échantillonnée pour permettre au procédé selon l'invention de déclencher la fourniture de la puissance auxiliaire de façon réactive. Pour cela, chaque moyen de mesure est de préférence indépendant et dédié à ce procédé. Le bruit, venant entre autre du moyen de mesure lui-même, de la chaine de transmission de données ou encore de la chaine d'acquisition numérique, notamment dû aux perturbations électromagnétiques, peut être filtré et le calcul de la dérivée peut se faire selon n'importe quel algorithme simple, robuste et rapide. Par exemple un filtre du premier ordre et un calcul de cette dérivée par la formule d'Euler, donne une bonne réactivité au procédé selon l'invention.

Il est également possible d'anticiper la panne du moteur thermique afin de préparer la machine électrique à fournir la puissance auxiliaire au rotor principal. En effet, les aéronefs comportent traditionnellement un boîtier de contrôle relié au moteur thermique, qui est couramment désigné par l'acronyme *EECU* pour « Electronic Engine Control Unit » en langue anglaise. Ce boîtier électronique de contrôle *EECU* contrôle le fonctionnement du moteur thermique et fournit notamment des caractéristiques de fonctionnement du moteur thermique. Sur certains aéronefs, il est remplacé par un calculateur moteur qui est couramment désigné par l'acronyme *FADEC* ou « Full Authority Digital Engine Control » en langue anglaise. Ce calculateur moteur *FADEC* a une autorité plus importante que le boîtier électronique de contrôle *EECU* et limite ainsi l'intervention du pilote dans la gestion du moteur thermique.

Les caractéristiques de fonctionnement du moteur thermique sont par exemple les températures et les pressions des fluides du moteur thermiques.

La variation de ces caractéristiques de fonctionnement du moteur thermique permet alors d'identifier qu'une panne de ce moteur thermique va bientôt se produire. Avantageusement, selon le procédé de l'invention, on utilise ces caractéristiques de fonctionnement pour anticiper la détection d'une panne du moteur thermique, puis on prépare la machine électrique à fournir la puissance auxiliaire au rotor principal.

Pour préparer la machine électrique à fournir cette puissance auxiliaire, on peut activer préalablement le moyen de stockage, par exemple dans le cas où ce moyen de stockage est une pile thermique nécessitant un temps d'activation avant de fournir l'énergie électrique qu'elle comporte.

On peut également préparer la machine électrique à fournir cette puissance auxiliaire en démarrant préalablement la machine électrique, par exemple dans le cas d'une machine électrique liée à la boîte de transmission principale de puissance par l'intermédiaire d'une roue libre. Il est alors nécessaire d'amener cette machine électrique à la vitesse de rotation de la boîte de transmission principale de puissance avant la fourniture effective de la puissance auxiliaire.

De plus, afin de réduire le besoin en puissance auxiliaire, et par suite la masse du moyen de stockage, on peut limiter l'utilisation du procédé selon l'invention à partir d'une hauteur-sol de l'aéronef. En effet, à partir d'une certaine hauteur-sol, les vols stationnaires sont très rares, de sorte que l'entrée en phase d'autorotation est facilitée, l'aéronef ayant une vitesse d'avancement non nulle. Ainsi, le procédé pourra être opérationnel uniquement en dessous d'une hauteur-sol prédéterminée de l'aéronef. Par exemple, cette hauteur-sol prédéterminée est 2000m.

La présente invention a aussi pour objet un aéronef à voilure tournante comportant un dispositif d'assistance d'un pilote de cet aéronef lors d'une phase de vol en autorotation, muni d'une installation motrice hybride qui comporte un unique moteur thermique, au moins une machine électrique et une boîte de transmission principale de puissance. Ce dispositif comporte également au moins un moyen de stockage d'énergie électrique et un moyen de commande de la machine électrique disposant d'une mémoire.

L'aéronef monomoteur comporte également au moins un rotor principal entraîné en rotation par l'installation motrice hybride et tournant à une vitesse nominale de rotation en vol.

Ce dispositif est remarquable en ce que l'aéronef comporte un moyen de surveillance pour surveiller un paramètre de surveillance de l'aéronef afin de détecter une éventuelle panne du moteur thermique, le moyen de commande communiquant avec le moyen de surveillance et la machine électrique afin de mettre en oeuvre le procédé précédemment décrit.

Le paramètre de surveillance peut par exemple être la puissance du rotor principal qui chute lors d'une panne du moteur thermique. Cette chute de puissance peut être évaluée par l'intermédiaire de la vitesse de rotation du rotor principal ainsi que par la décélération de ce rotor principal.

Ainsi, le moyen de surveillance comporte un premier moyen de mesure de la vitesse de rotation du rotor principal permettant d'évaluer une chute de puissance de ce rotor principal.

De plus, le moyen de commande peut comporter une unité de calcul et une mémoire. Cette unité de calcul exécute alors des instructions mémorisées dans la mémoire afin de déterminer s'il y a une panne du moteur thermique, puis pour faire fournir par la machine électrique le cas échéant une puissance auxiliaire au rotor principal, permettant ainsi d'assister le pilote de l'aéronef lors de la phase de vol en autorotation consécutive à la panne pour manoeuvrer l'aéronef.

Par contre, la puissance auxiliaire n'intervient que pour assister le pilote lors de la panne du moteur thermique. La puissance maximum $W_{max}$ que peut fournir la machine électrique peut donc être limitée, ce qui permet également de limiter sa masse et son volume. Cette puissance est par exemple de l'ordre de 15 à 30% d'une puissance maximum du moteur thermique de l'aéronef.

Par ailleurs, la puissance auxiliaire n'intervenant que pour assister le pilote lors de la panne du moteur thermique, la durée d'utilisation de la machine électrique est limitée, de l'ordre de 15 secondes. Par suite, la quantité d'énergie électrique présente dans le moyen de stockage est également limitée.

De fait, les capacités de stoker de l'énergie électrique de ce moyen de stockage, et par suite ses dimensions, sont également limitées. Avantageusement, cela permet de limiter la masse de ce moyen de stockage.

Ce moyen de stockage peut comporter par exemple au moins une batterie rechargeable au moins une pile thermique ou bien au moins une supercapacité.

Cependant, il peut être intéressant que le moyen de stockage comporte une quantité d'énergie électrique plus importante. Ainsi, le pilote peut utiliser la puissance auxiliaire en dehors d'une panne du moteur thermique afin d'augmenter la puissance de l'aéronef monomoteur. Dans ce but, le pilote dispose d'une commande dédiée pour activer cette puissance auxiliaire, tel qu'un interrupteur, et il peut alors utiliser cette puissance auxiliaire lors de phases de vol particulières et exigeantes, telles que le décollage à masse embarquée maximum ou bien certaines manoeuvres de virage sous fortes charges aérodynamiques.

Afin d'informer le pilote de cette puissance auxiliaire disponible, notamment pour qu'il conserve une puissance auxiliaire suffisante en cas de panne du moteur thermique, le dispositif selon l'invention peut afficher une information sur un moyen d'affichage de l'aéronef. Ce dispositif peut également afficher une indication informant si ce dispositif est opérationnel sur ce moyen d'affichage.

Par exemple, l'information de la puissance auxiliaire disponible indique le temps d'utilisation restant de cette puissance auxiliaire à sa valeur maximum $W_{max}$ correspondant en fait à l'énergie électrique disponible dans le moyen de stockage pour alimenter la machine électrique.

Selon un mode de réalisation de ce dispositif, la machine électrique peut fonctionner en mode générateur, transformant alors une énergie mécanique du rotor principal ou bien du moteur thermique en énergie électrique. Le moyen de stockage comportant au moins un moyen rechargeable de stockage d'énergie électrique, la machine électrique permet alors de charger chaque moyen rechargeable de stockage.

Le dispositif peut également comporter un moyen de coupure de l'alimentation électrique entre la machine électrique et le moyen de stockage. En effet, il est intéressant de pouvoir couper le circuit électrique reliant ces composants pour des raisons de sécurité, afin d'isoler ces composants pour par exemple éviter une fourniture de puissance intempestive sur la boite de transmission principale, ou encore pour protéger le système contre une sur-température afin d'éviter tout risque d'incendie.

Par ailleurs, la machine électrique peut être remplacée, pour la fourniture de la puissance auxiliaire, par un moteur utilisant une autre source d'énergie que l'électricité. Par exemple, la machine électrique est remplacée par un moteur pneumatique ou bien un moteur pyrotechnique. Par contre, ces types de moteurs ne sont pas réversibles.

L'invention et ses avantages apparaîtront avec plus de détails dans le cadre de la description qui suit avec des exemples de réalisation donnés à titre illustratif en référence aux figures annexées qui représentent :

- la figure 1, un schéma synoptique du procédé selon l'invention,

- la figure 2, un aéronef monomoteur équipé d'un dispositif selon l'invention,

- la figure 3, un moyen d'affichage d'un tel dispositif,

- la figure 4, un graphique représentant la puissance auxiliaire fournie par ce dispositif et

- la figure 5, un graphique représentant le domaine hauteur-vitesse d'un aéronef.

Les éléments présents dans plusieurs figures distinctes sont affectés d'une seule et même référence.

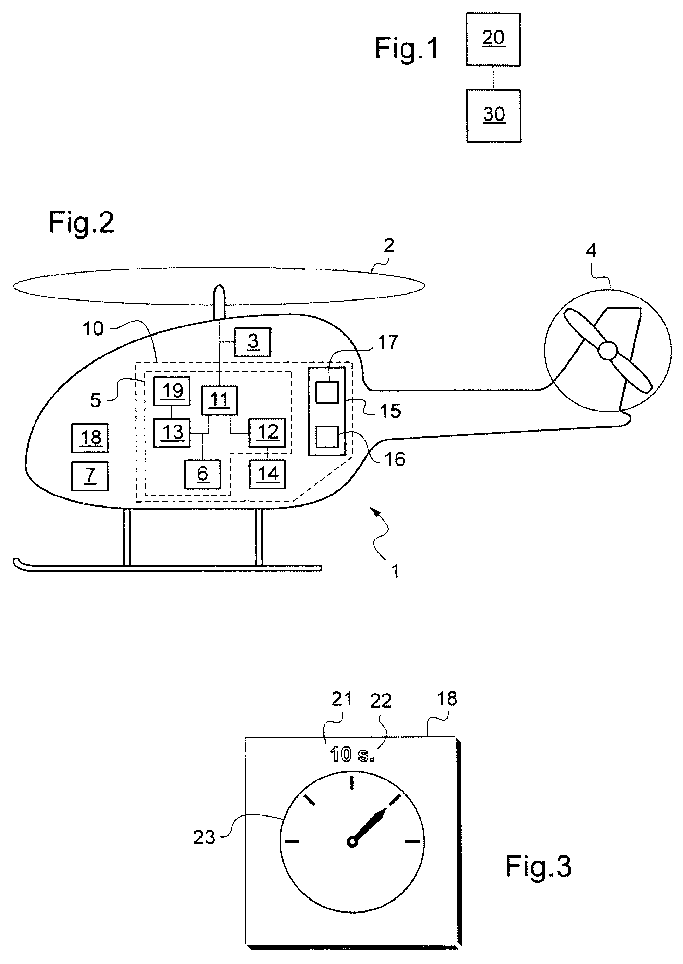

La figure 1 décrit un procédé d'assistance d'un pilote d'un aéronef 1 à voilure tournante selon l'invention lors d'une phase de vol en autorotation. La figure 2 décrit un aéronef 1 à voilure tournante équipé d'un dispositif 10 d'assistance d'un pilote de cet aéronef 1 selon l'invention lors d'une phase de vol en autorotation.

Ce procédé et ce dispositif 10 permettent d'assister en vol le pilote lors de la panne du moteur thermique de cet aéronef 1, notamment pour atteindre en sécurité la phase de vol en autorotation et réaliser un atterrissage.

Un tel dispositif 10 selon l'invention et représenté sur la figure 2 comporte une installation motrice hybride 5 munie d'un unique moteur thermique 13, d'une machine électrique 12 pouvant fournir une puissance maximum $W_{max}$, d'une boîte de transmission principale de puissance 11 et un boîtier de contrôle *EECU* 19 fournissant des caractéristiques de fonctionnement du moteur thermique 13. Ce dispositif 10 comporte également un moyen de stockage 14 d'énergie électrique, et un moyen de commande 15 de la machine électrique 12 muni d'une unité de calcul 17 et d'une mémoire 16.

L'installation motrice hybride 5 est apte à entraîner en rotation un rotor principal 2 de l'aéronef 1, qui tourne en vol à une vitesse nominale de rotation $Nr_N$. L'aéronef 1 comporte également un premier moyen de mesure 3 de la vitesse instantanée de rotation $Nr$ du rotor principal 2 et un moyen d'affichage 18. On désignera par la suite cette vitesse instantanée de rotation $Nr$ par l'expression « vitesse de rotation $Nr$ ».

Le procédé selon l'invention se compose de deux étapes. Il comporte une première étape de surveillance 20 au cours de laquelle on mesure pendant un vol un paramètre de surveillance afin de détecter une panne du moteur thermique 13. Puis, au cours d'une seconde étape 30, lorsqu'une panne du moteur thermique 13 est détectée, on commande la machine électrique 12 pour fournir une puissance auxiliaire $W_e$ au rotor principal 2, permettant ainsi d'assister un pilote de l'aéronef 1 lors de la phase de vol en autorotation consécutive à cette panne pour manoeuvrer l'aéronef 1.

Lors de l'étape de surveillance 20, on peut mesurer par l'intermédiaire du premier moyen de mesure 3 la vitesse de rotation $Nr$ du rotor principal 2. En effet, lors de la panne du moteur thermique 13, cette vitesse de rotation $Nr$ chute rapidement.

Lors de l'étape de surveillance 20, on peut également déterminer la dérivée de cette vitesse de rotation $Nr$,

c'est-à-dire la décélération de la rotation du rotor principal 2. En effet, lors de la panne du moteur thermique 13, cette chute de la vitesse de rotation *Nr* se déroule sous une forte décélération. De fait, cette décélération peut être détectée dès l'instant suivant la panne, alors qu'il faut attendre que cette vitesse de rotation *Nr* ait atteint une première valeur prédéterminée pour être certain qu'il y a réellement une panne.

L'unité de calcul 17 exécute alors des instructions mémorisées dans la mémoire 16 afin de déterminer s'il y a une panne du moteur thermique 13. On considère ainsi que le moteur thermique 13 est en panne lorsqu'une puissance de contrôle $W_C$ est positive, cette puissance de contrôle $W_C$ étant obtenue selon la relation suivante :

$$W_C = \frac{W_{\max}}{Nr_{t1} - Nr_{t2}} \left( Nr + k \frac{dNr}{dt} - Nr_{t2} \right),$$ $W_{max}$ étant la puissance maximum que peut fournir la machine électrique 12, *Nr* étant la vitesse instantanée de rotation du rotor principal 2, $\dfrac{dNr}{dt}$ étant la dérivée de la vitesse

de rotation *Nr, Nr$_{t1}$, Nr$_{t2}$* et *k* étant des coefficients positifs qui dépendent de l'aéronef 1.

Au cours de l'étape de surveillance 20, d'autres paramètres de surveillance peuvent être substitués à la vitesse de rotation Nr du rotor principal. Par exemple, on peut mesurer, par l'intermédiaire d'un couplemètre 6, un couple en sortie du moteur thermique, la valeur de ce couple chutant rapidement lors de la panne du moteur thermique. De même, lorsque le moteur thermique de l'aéronef est un turbomoteur comportant une turbine de compression, on peut utiliser la vitesse cette turbine de compression pour détecter la panne du turbomoteur.

Lors de l'étape 30, après détection d'une panne du moteur thermique 13, l'unité de calcul 17 exécute des instructions mémorisées dans la mémoire 16 afin que la machine électrique 12 fournisse une puissance auxiliaire $W_e$ au rotor principal 2, permettant ainsi d'assister le pilote de l'aéronef 1 lors de la phase de vol en autorotation consécutive à la panne pour manoeuvrer l'aéronef.

Cette puissance auxiliaire $W_e$ est comprise entre une valeur nulle et la puissance maximum $W_{max}$. Elle est en fait égale à la puissance de contrôle $W_C$ lorsque cette puissance de contrôle $W_C$ est inférieure à la puissance maximum $W_{max}$ et la puissance auxiliaire $W_e$ est égale à la puissance maximum $W_{max}$ lorsque cette puissance de contrôle $W_C$ est supérieure ou égale à la puissance maximum $W_{max}$.

La machine électrique 12 est alors dans un mode de fonctionnement moteur, c'est-à-dire qu'elle transforme une énergie électrique, stockée dans le moyen de stockage 14, en puissance mécanique auxiliaire.

Par ailleurs, l'aéronef 1 représenté sur la figure 2, comporte également un moyen d'information 7 indiquant que l'aéronef 1 a décollé. En effet, lorsque l'aéronef 1 est au sol, le rotor principal 2 tourne au ralenti et cette vitesse de rotation au ralenti pourrait être identifiée comme une baisse de puissance du rotor principal 2, et par suite comme une panne du moteur thermique 13. De fait, le procédé selon l'invention ne peut pas être déclenché tant que le moyen d'information 7 n'indique pas que l'aéronef 1 a décollé. Par exemple, le moyen d'information 7 est une poignée tournante, telle qu'une régulation de la puissance activée uniquement en vol.

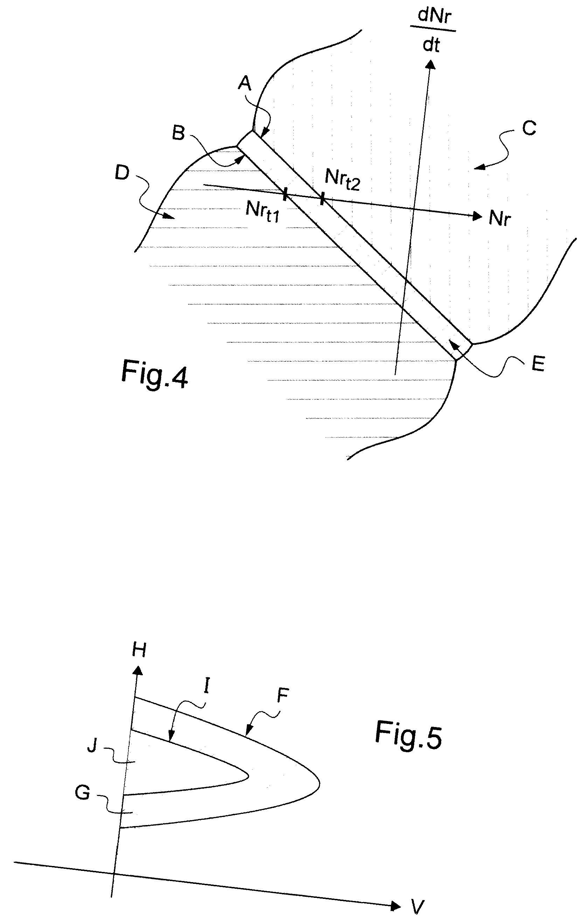

La figure 4 représente la puissance auxiliaire fournie par la machine électrique 12 en fonction de la vitesse de rotation *Nr* du rotor principal 2 en abscisse et de sa dérivée $\dfrac{dNr}{dt}$ en ordonnée. Les coefficients *Nr$_{t1}$* et *Nr$_{t2}$* définissent

respectivement deux limites A et B, déterminant ainsi trois zones C, D et E. La zone C se trouve au dessus de la limite A et la zone D se trouve au dessous de la limite B. Dans la zone C, la puissance auxiliaire $W_e$ fournie par la machine électrique est nulle alors que dans la zone D, cette puissance auxiliaire $W_e$ est égale à la puissance maximum $W_{max}$. Dans la zone E, comprise entre les deux limites A et B, la puissance auxiliaire $W_e$ est comprise entre une valeur nulle et la puissance maximum $W_{max}$.

Cette zone E permet d'avoir une augmentation progressive de la puissance auxiliaire, évitant ainsi un passage brutal d'une valeur nulle à la puissance maximum $W_{max}$ si on utilisait uniquement un coefficient $Nr_{t2}$, et par suite uniquement deux zones C et D.

De plus, la puissance auxiliaire $W_e$ que doit fournir la machine électrique 12 intervient pour assister le pilote dans l'entrée en phase de vol en autorotation et d'atterrissage, le rotor principal 2 étant en autorotation. Cette machine électrique ne remplace pas le moteur thermique 13 pour entraîner le rotor principal 2. La puissance maximum $W_{max}$ de la machine électrique 12 peut donc être limitée. Elle est par exemple de l'ordre de 15 à 30% de la puissance maximum que peut fournir le moteur thermique 13.

Par ailleurs, la fourniture de cette puissance auxiliaire au rotor principal 2 lors de la panne du moteur thermique 13 peut permettre d'une part l'augmentation de la masse maximum au décollage d'un aéronef 1 monomoteur et d'autre part l'augmentation du domaine de vol de cet aéronef 1.

En effet, la masse maximum au décollage d'un aéronef monomoteur peut être limitée par les performances de cet aéronef en phase de vol en autorotation, notamment pour prendre en compte le cas d'une panne moteur pendant la phase de décollage.

De la sorte, la fourniture de cette puissance auxiliaire améliorant les performances de cet aéronef en phase de vol en autorotation peut permettre l'augmentation de sa masse maximum au décollage.

De plus, le diagramme hauteur-vitesse de l'aéronef 1, peut également évoluer avec l'utilisation possible de cette puissance auxiliaire. Ainsi le diagramme hauteur-vitesse F, représenté sur la figure 5, détermine la vitesse horizontale minimum en abscisse, que doit respecter l'aéronef 1 en fonction de sa hauteur-sol en ordonnée. Une zone G de ce diagramme F est à éviter car la phase de vol en autorotation ne peut pas être alors exécutée en sécurité.

Par suite, la fourniture de cette puissance auxiliaire améliorant les performances de l'aéronef 1 en phase de vol en autorotation permet d'aboutir au diagramme hauteur-vitesse I et de réduire ainsi la zone J de ce diagramme hauteur-vitesse à éviter, augmentant par la même le domaine de vol de l'aéronef 1.

Par ailleurs, la durée d'utilisation de la machine électrique 12 pour réaliser l'entrée en phase de vol en autorotation et l'atterrissage est de l'ordre de 15 secondes. De fait, les dimensions du moyen de stockage 14 peuvent être limitées pour contenir la quantité d'énergie électrique nécessaire et suffisante. Par suite, la masse de ce moyen de stockage 14 est également limitée.

Par contre, il peut être intéressant de pouvoir disposer de la puissance auxiliaire également lors du vol de l'aéronef 1 afin de cumuler la puissance du moteur thermique 13 pour réaliser par exemple certaines manoeuvres telle que le décollage à masse embarquée maximum ou bien certaines manoeuvres de virage sous fortes charges aérodynamiques.

Dans ce but, le pilote peut par exemple commander la fourniture de la puissance auxiliaire par l'intermédiaire d'une commande dédiée, telle qu'un interrupteur, présente dans l'aéronef 1.

Cependant, le pilote de l'aéronef 1 doit être certain de disposer, en cas de panne du moteur thermique 13, de la puissance auxiliaire $W_e$ suffisante pour gérer cette panne, de sorte que la machine électrique 12 puisse fournir pendant au moins 15 secondes la puissance auxiliaire $W_e$ au rotor principal 2.

Le moyen d'affichage 18 de l'aéronef 1, représenté sur la figure 3, permet d'afficher une information 21 de la puissance auxiliaire $W_e$ disponible dans le moyen de stockage 14. Cette information 21 peut par exemple être ajoutée au moyen d'affichage 18 indiquant sur un cadran 23 la vitesse de rotation $Nr$ du rotor principal 2. On peut également afficher sur ce moyen d'affichage 18 une indication 22 informant si le procédé est opérationnel.

Par exemple, cette information 21 est le temps d'utilisation restant de la puissance auxiliaire $W_e$ à la puissance maximum $W_{max}$ et l'indication 22 informant si le procédé est opérationnel peut être une couleur de l'affichage de cette information 21.

Le moyen de stockage 14 peut donc être dimensionné à minima pour permettre d'assister le pilote lors de la panne du moteur thermique 13, mais il peut également permettre de stocker une quantité d'énergie électrique plus importante. De plus, ce moyen de stockage 14 peut être rechargeable ou non.

Par exemple, le moyen de stockage 14 comporte au moins une batterie rechargeable, une pile thermique ou bien une supercapacité.

Par ailleurs, la machine électrique 12 est une machine réversible et peut fonctionner aussi bien en mode de fonctionnement moteur que générateur. De la sorte, lorsqu'elle est en mode générateur, cette machine électrique 12 peut transformer une énergie mécanique du rotor principal 2 ou du moteur thermique 13 en énergie électrique.

Selon un mode de réalisation de l'invention, la machine électrique 12 peut alors, en mode générateur, fournir de l'énergie électrique pour charger le moyen de stockage, qui doit être rechargeable et est destiné à l'alimentation électrique de la machine électrique 12 ainsi qu'à l'alimentation électrique générale de l'aéronef 1.

Avantageusement, le moyen de stockage 14, destiné entre autres à l'alimentation électrique générale de l'aéronef 1, peut alors permettre, lorsque le générateur principal d'électricité de l'aéronef ne fournit plus assez d'énergie, le démarrage du moteur thermique et l'alimentation électrique générale de l'aéronef 1. De la sorte, le moyen de stockage 14 peut remplacer les batteries utilisées traditionnellement pour l'alimentation électrique générale de l'aéronef 1 et la machine électrique 12 peut remplacer le générateur principal d'électricité de cet aéronef 1.

La suppression de ces batteries et du générateur principal d'électricité permet de compenser en partie l'augmentation de masse due à la machine électrique 12 et au moyen de stockage 14.

Cependant, le moyen de stockage 14 comportant l'énergie électrique alimentant d'une part la machine électrique 12 et d'autre part l'aéronef 1, la totalité de cette énergie électrique ne peut pas être utilisée pour la machine électrique 12. En effet, lors d'une panne du moteur thermique 13 ou bien du générateur principal d'électricité, les instruments de vol de l'aéronef 1 doivent toujours être alimentés. De fait, une partie de l'énergie électrique disponible dans ce moyen de stockage 14 est réservée pour alimenter électriquement ces instruments de vol, alors que le reste de l'énergie électrique disponible peut être fournie à la machine électrique 12 pour fournir une puissance auxiliaire au rotor principal 2. De fait, le moyen d'affichage 18 affiche alors l'information 21 en utilisant le reste de cette l'énergie électrique disponible.

Selon un mode de réalisation de l'invention, il est possible d'anticiper l'apparition de la panne du moteur thermique 13 afin de préparer la machine électrique 12 à fournir la puissance auxiliaire au rotor principal 2. Ainsi, la puissance auxiliaire peut être fournie au plus tôt, dès la détection de la panne.

En effet, on peut utiliser les caractéristiques de fonctionnement du moteur thermique 13, telles que les températures et les pressions des fluides de ce moteur thermique 13 fournies par le boîtier de contrôle *EECU* 19, et notamment leurs variations, pour anticiper la détection de cette panne du moteur thermique 13.

Ensuite, pour préparer la machine électrique 12 à fournir cette puissance auxiliaire, on peut notamment activer préalablement le moyen de stockage 14, par exemple dans le cas où ce moyen de stockage 14 est une pile thermique nécessitant un temps d'activation avant de fournir l'énergie électrique qu'elle comporte.

On peut également préparer la machine électrique 12 à fournir cette puissance auxiliaire en démarrant préalablement cette machine électrique 12, par exemple dans le cas où elle est liée à la boîte de transmission principale de puissance 11 par l'intermédiaire d'une roue libre. Il est alors nécessaire d'amener cette machine électrique 12 à la vitesse de rotation de la boîte de transmission principale de puissance 11 avant la fourniture effective de la puissance auxiliaire.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Procédé d'assistance d'un pilote d'un aéronef (1) à voilure tournante lors d'une phase de vol en autorotation, ledit aéronef (1) comportant :

   - une installation motrice hybride (5) munie d'un unique moteur thermique (13), d'au moins une machine électrique (12) et d'une boîte de transmission principale de puissance (11),
   - au moins un moyen de stockage (14) d'énergie électrique et
   - au moins un rotor principal (2) entraîné, en vol, à une vitesse nominale de rotation $Nr_N$ par ladite installation motrice hybride (5),

   **caractérisé en ce que**

   - durant une étape de surveillance (20), on mesure pendant un vol un paramètre de surveillance dudit aéronef (1) afin de détecter une éventuelle panne dudit moteur thermique (13),
   - lorsqu'une panne dudit moteur thermique (13) est détectée, on commande ladite machine électrique (12) pour fournir une puissance auxiliaire $W_e$ audit rotor principal (2), permettant ainsi d'assister ledit pilote dudit aéronef (1) lors de l'entrée en phase de vol en autorotation consécutive à ladite panne pour manoeuvrer ledit aéronef (1).

2. Procédé selon la revendication 1,
   **caractérisé en ce que**, ledit aéronef (1) disposant d'un premier moyen de mesure (3) d'une vitesse instantanée de rotation $Nr$ dudit rotor principal (2), durant ladite étape de surveillance (20) on mesure ladite vitesse instantanée de rotation $Nr$ pour évaluer une chute de puissance dudit rotor principal (2) représentative de ladite panne dudit moteur thermique (13).

3. Procédé selon la revendication 2,
   **caractérisé en ce que** l'on détermine une dérivée $\dfrac{dNr}{dt}$ de ladite vitesse instantanée de rotation $Nr$ durant ladite étape de surveillance.

4. Procédé selon la revendication 3,
   **caractérisé en ce que** l'on considère que ledit moteur thermique (13) est en panne lorsqu'une puissance de contrôle $W_C$ est positive, ladite puissance de contrôle $W_C$ étant obtenue selon la première relation suivante :

$$W_C = \frac{W_{\max}}{Nr_{t1} - Nr_{t2}}\left( Nr + k\frac{dNr}{dt} - Nr_{t2} \right),$$ $W_{max}$ étant la puissance maximum que peut fournir ladite machine électrique (12), $Nr$ étant ladite vitesse instantanée de rotation dudit rotor principal (2), $\dfrac{dNr}{dt}$ étant la dérivée de ladite vitesse instantanée de rotation $Nr$, $Nr_{t1}$, $Nr_{t2}$ et k étant des coefficients positifs qui dépendent dudit aéronef (1), $Nr_{t1}$ étant inférieur à $Nr_{t2}$.

5. Procédé selon la revendication 4,
**caractérisé en ce que**, ledit coefficient $Nr_{t1}$ est compris entre 82,5% et 88% de la vitesse nominale de rotation $Nr_N$ et ledit coefficient $Nr_{t2}$ est compris entre 93% et 98,5% de la vitesse nominale de rotation $Nr_N$.

6. Procédé selon la revendication 1,
**caractérisé en ce que**, ledit moteur thermique (13) étant un turbomoteur disposant d'un second moyen de mesure d'une vitesse instantanée de rotation $NG$ d'une turbine de compression dudit turbomoteur, on considère que ledit moteur thermique (13) est en panne lorsqu'une puissance de contrôle $W_C$ est positive, ladite puissance de contrôle $W_C$ étant obtenue selon la seconde relation suivante :

$$W_C = \frac{W_{max}}{NG_{t1} - NG_{t2}}\left( NG + k'\frac{dNG}{dt} - NG_{t2} \right), \quad W_{max} \text{ étant la puissance maximum que peut four-}$$

nir ladite machine électrique (12), $NG$ étant ladite vitesse instantanée de rotation de ladite turbine de compression, $\dfrac{dNG}{dt}$ étant la dérivée de ladite vitesse instantanée de rotation $NG$, $NG_{t1}$, $NG_{t2}$ et k' étant des coefficients positifs dépendant dudit aéronef (1), $NG_{t1}$ étant inférieur à $NG_{t2}$.

7. Procédé selon la revendication 1,
**caractérisé en ce que**, ledit aéronef (1) disposant d'un troisième moyen de mesure (6) mesurant un couple en sortie dudit moteur thermique (13), durant ladite étape de surveillance (20) on mesure ledit couple pour évaluer une chute de puissance dudit moteur thermique (13) représentative de ladite panne dudit moteur thermique (13).

8. Procédé selon l'une quelconque des revendications 4 à 7,
**caractérisé en ce que** ladite puissance auxiliaire $W_e$ est égale à ladite puissance de contrôle $W_C$ lorsque ladite puissance de contrôle $W_C$ est inférieure à ladite puissance maximum $W_{max}$ et ladite puissance auxiliaire $W_e$ est égale à ladite puissance maximum $W_{max}$ lorsque ladite puissance de contrôle $W_C$ est supérieure ou égale à ladite puissance maximum $W_{max}$.

9. Procédé selon l'une quelconque des revendications 1 à 8,
**caractérisé en ce que**, ledit aéronef (1) disposant d'un moyen d'affichage (18), on affiche sur ledit moyen d'affichage (18) une information (21) relative à ladite puissance auxiliaire $W_e$ disponible ainsi qu'une indication (22) informant si ledit procédé est opérationnel.

10. Procédé selon la revendication 9,
**caractérisé en ce que** ladite information (21) est le temps d'utilisation restant de ladite puissance auxiliaire $W_e$ à la puissance maximum $W_{max}$ que peut fournir ladite machine électrique (12).

11. Procédé selon l'une quelconque des revendications 1 à 10,
**caractérisé en ce que** ledit procédé est opérationnel uniquement au cours d'un vol dudit aéronef (1), un moyen d'information (7) indiquant que ledit aéronef (1) a décollé.

12. Procédé selon l'une quelconque des revendications 1 à 11,
**caractérisé en ce que** ledit procédé est opérationnel uniquement en dessous d'une hauteur-sol prédéterminée dudit aéronef (1).

13. Aéronef (1) à voilure tournante comportant :

- un dispositif (10) d'assistance d'un pilote dudit aéronef (1) lors d'une phase de vol en autorotation muni :

• d'une installation motrice hybride (5) comportant un unique moteur thermique (13), au moins une machine électrique (12) et une boîte de transmission principale de puissance (11),
• d'au moins un moyen de stockage (14) d'énergie électrique, et
• d'un moyen de commande (15) de ladite machine électrique (12) muni d'une mémoire (16),

- au moins un rotor principal (2) entraîné en rotation par ladite installation motrice hybride (5) et tournant à une vitesse instantanée de rotation *Nr*,

**caractérisé en ce que** ledit aéronef (1) comporte un moyen de surveillance pour surveiller un paramètre de surveillance dudit aéronef (1) afin de détecter une éventuelle panne dudit moteur thermique (13), ledit moyen de commande (15) communiquant avec ledit moyen de surveillance et ladite machine électrique (12) afin de mettre en oeuvre le procédé selon les revendications 1 à 12.

**14.** Aéronef (1) selon la revendication 13,
**caractérisé en ce que** ledit moyen de surveillance comporte un moyen de mesure pour évaluer une chute de puissance dudit rotor principal (2).

**15.** Aéronef (1) selon la revendication 13,
**caractérisé en ce que** ledit moyen de surveillance comporte un premier moyen de mesure (3) de ladite vitesse instantanée de rotation *Nr* pour évaluer une chute de puissance dudit rotor principal (2).

**16.** Aéronef (1) selon l'une quelconque des revendications 13 à 15,
**caractérisé en ce que** ledit moyen de commande comporte une unité de calcul et une mémoire, ladite unité de calcul exécutant des instructions mémorisées dans ladite mémoire afin de déterminer s'il y a une panne dudit moteur thermique (13), puis pour faire fournir par ladite machine électrique (12) le cas échéant une puissance auxiliaire $W_e$ audit rotor principal (2), permettant ainsi d'assister ledit pilote dudit aéronef (1) lors de ladite phase de vol en autorotation consécutive à ladite panne pour manoeuvrer ledit aéronef (1).

**17.** Aéronef (1) selon l'une quelconque des revendications 13 à 16,
**caractérisé en ce que** ledit aéronef comporte un moyen d'affichage (18) pour afficher une information (21) relative à ladite puissance auxiliaire $W_e$ disponible ainsi qu'une indication (22) informant si ledit dispositif (10) est opérationnel.

**Patentansprüche**

**1.** Verfahren zur Unterstützung eines Piloten eines Drehflügel-Luftfahrzeugs (1) während einer Autorotationsflugphase, wobei das Luftfahrzeug (1) aufweist:

- eine Hybridantriebsanlage (5) mit einem einzigen Verbrennungsmotor (13), mindestens einer elektrischen Maschine (12) und einem Hauptleistungsgetriebe (11),
- mindestens ein Mittel (14) zur Speicherung elektrischer Energie, und
- mindestens einen Hauptrotor (2), der im Flug von der Hybridantriebsanlage (5) mit einer Nominal-Rotationsgeschwindigkeit $Nr_N$ angetrieben wird, **dadurch gekennzeichnet, dass**
- während eines Überwachungsschritts (20) während eines Flugs ein Überwachungsparameter des Luftfahrzeugs (1) gemessen wird, um einen eventuellen Ausfall des Verbrennungsmotors (13) zu erfassen,
- wenn ein Ausfall des Verbrennungsmotors (13) erfasst wurde, die elektrische Maschine (12) so gesteuert wird, dass sie eine Hilfsleistung $W_e$ an den Hauptrotor (2) liefert, was es ermöglicht, den Piloten des Luftfahrzeugs (1) somit während des Eintritts in die Autorotationsflugphase infolge des Ausfalls bei der Lenkung des Luftfahrzeugs (1) zu unterstützen.

**2.** Verfahren nach Anspruch 1,
**dadurch gekennzeichnet, dass** das Luftfahrzeug (1) über ein erstes Messinstrument (3) zur Messung einer augenblicklichen Drehgeschwindigkeit *Nr* des Hauptrotors (2) verfügt, wobei während des Überwachungsschritts (20) die augenblickliche Rotationsgeschwindigkeit Nr gemessen wird, um einen Leistungsabfall des Hauptrotors (2) zu berechnen, der repräsentativ ist für den Ausfall des Verbrennungsmotors (13).

**3.** Verfahren nach Anspruch 2,

**dadurch gekennzeichnet, dass** eine Ableitung $\frac{dNr}{dt}$ der augenblicklichen Rotationsgeschwindigkeit *Nr* während des Überwachungsschritts bestimmt wird.

4. Verfahren nach Anspruch 3,
**dadurch gekennzeichnet, dass** angenommen wird, dass der Verbrennungsmotor (13) ausgefallen ist, wenn eine Kontrollleistung $W_C$ positiv ist, wobei die Kontrollleistung $W_C$ durch die folgende Gleichung erhalten wird:

$$W_C = \frac{W_{max}}{Nr_{t1} - Nr_{t2}} \left( Nr + k \frac{dNr}{dt} - Nr_{t2} \right),$$ wobei $W_{max}$ die maximale Leistung ist, die die elektrische Maschine (12) liefern kann, *Nr* die augenblickliche Rotationsgeschwindigkeit des Hauptrotors (2) ist, $\frac{dNr}{dt}$ die Ableitung der augenblicklichen Rotationsgeschwindigkeit *Nr* ist, und $Nr_{t1}$, $Nr_{t2}$ und *k* positive Koeffizienten sind, die von dem Luftfahrzeug (1) abhängen, wobei $Nr_{t1}$ kleiner ist als $Nr_{t2}$.

5. Verfahren nach Anspruch 4,
**dadurch gekennzeichnet, dass** der erste Koeffizient $Nr_{t1}$ zwischen 82,5% und 88% der Nominal-Rotationsgeschwindigkeit $Nr_N$ liegt, und der Koeffizient $Nr_{t2}$ zwischen 93% und 98,5% der Nominalrotationsgeschwindigkeit liegt.

6. Verfahren nach Anspruch 1,
**dadurch gekennzeichnet, dass** der Verbrennungsmotor (13) ein Turbomotor ist, der über ein zweites Messinstrument zur Messung einer augenblicklichen Rotationsgeschwindigkeit *NG* einer Kompressorturbine des Turbomotors verfügt, wobei angenommen wird, dass der Verbrennungsmotor (13) ausgefallen ist, wenn eine Kontrollleistung $W_C$ positiv ist, wobei die Kontrollleistung $W_C$ durch folgende Gleichung erhalten wird:

$$W_C = \frac{W_{max}}{NG_{t1} - NG_{t2}} \left( NG + k' \frac{dNG}{dt} - NG_{t2} \right),$$ wobei $W_{max}$ die maximale Leistung ist, die die elektrische Maschine (12) liefern kann, *NG* die augenblickliche Rotationsgeschwindigkeit der Kompressortubine ist $\frac{dNG}{dt}$ die Ableitung der augenblicklichen Rotationsgeschwindigkeit *NG* ist, $NG_{t1}$, $NG_{t2}$ und *k'* positive Koeffizienten sind, die von dem Luftfahrzeug (1) abhängen, wobei $NGt1$ kleiner ist als $NG_{t2}$.

7. Verfahren nach Anspruch 1,
**dadurch gekennzeichnet, dass** das Luftfahrzeug (1) über ein drittes Messinstrument (6) verfügt, welches ein Ausgangsdrehmoment des Verbrennungsmotors (13) misst, wobei während des Überwachungsschritts (20) das Drehmoment gemessen wird, um einen Leistungsabfall des Verbrennungsmotors (13) zu berechnen, der repräsentativ ist für den Ausfall des Verbrennungsmotors (13).

8. Verfahren nach einem der Ansprüche 4 bis 7,
**dadurch gekennzeichnet, dass** die Hilfsleistung $W_e$ gleich der Kontrollleistung $W_C$ ist, wenn die Kontrollleistung $W_C$ kleiner ist als die maximale Leistung $W_{max}$, und die Hilfsleistung $W_e$ gleich der maximalen Leistung $W_{max}$ ist, wenn die Kontrollleistung $W_C$ größer oder gleich der maximalen Leistung $W_{max}$ ist.

9. Verfahren nach einem der Ansprüche 1 bis 8,
**dadurch gekennzeichnet, dass** das Luftfahrzeug (1) über ein Anzeigemittel (18) verfügt, wobei auf dem Anzeigemittel (18) eine Information (21) bezüglich der verfügbaren Hilfsleistung $W_e$ sowie eine Angabe (22), die darüber informiert, ob das Verfahren betriebsbereit ist, angezeigt werden.

10. Verfahren nach Anspruch 9,
**dadurch gekennzeichnet, dass** die Information (21) die verbleibende Nutzungszeit der Hilfsleistung $W_e$ bei der maximalen Leistung $W_{max}$, die die elektrische Maschine (12) liefern kann, ist.

11. Verfahren nach einem der Ansprüche 1 bis 10,
**dadurch gekennzeichnet, dass** das Verfahren nur während eines Fluges des Luftfahrzeugs (1) betriebsbereit ist, wobei ein Informationsmittel (7) anzeigt, dass das Luftfahrzeug (1) gestartet ist.

**12.** Verfahren nach einem der Ansprüche 1 bis 11,
**dadurch gekennzeichnet, dass** das Verfahren nur unterhalb einer vorbestimmten Höhe des Luftfahrzeugs (1) über Grund betriebsbereit ist.

**13.** Drehflügel-Luftfahrzeug (1) mit:

- einer Vorrichtung (10) zur Unterstützung eines Piloten des Luftfahrzeugs (1) während einer Autorotationsflugphase, welche versehen ist mit:

• einer Hybridantriebsanlage (5) mit einem einzigen Verbrennungsmotor (13), mindestens einer elektrischen Maschine (12) und einem Hauptleistungsgetriebe (11),
• mindestens einem Mittel (14) zum Speichern elektrischer Energie und
• einem Steuermittel (15) der elektrischen Maschine (12), das mit einem Speicher (16) versehen ist,

- mindestens einem Hauptrotor (2), der durch die Hybridantriebsanlage (5) drehangetrieben wird und sich mit einer augenblicklichen Rotationsgeschwindigkeit $Nr$ dreht,

**dadurch gekennzeichnet, dass** das Luftfahrzeug (1) ein Überwachungsmittel aufweist zum Überwachen eines Überwachungsparameters des Luftfahrzeugs (1), um einen eventuellen Ausfall des Verbrennungsmotors (13) zu erfassen, wobei das Steuermittel (15) mit dem Überwachungsmittel und der elektrischen Maschine (12) kommuniziert, um das Verfahren nach den Ansprüchen 1 bis 12 durchzuführen.

**14.** Luftfahrzeug (1) nach Anspruch 13,
**dadurch gekennzeichnet, dass** das Überwachungsmittel ein Messinstrument aufweist zur Berechnung eines Leistungsabfalls des Hauptrotors (2).

**15.** Luftfahrzeug (1) nach Anspruch 13,
**dadurch gekennzeichnet, dass** das Überwachungsmittel ein erstes Instrument (3) zur Messung der augenblicklichen Rotationsgeschwindigkeit $Nr$ *zur* Berechnung eines Leistungsabfalls des Hauptrotors (2) aufweist.

**16.** Luftfahrzeug (1) nach einem der Ansprüche 13 bis 15,
**dadurch gekennzeichnet, dass** das Steuermittel eine Recheneinheit und einen Speicher aufweist, wobei die Recheneinheit in dem Speicher gespeicherte Befehle ausführt, um zu bestimmen, ob ein Ausfall des Verbrennungsmotors (13) vorlegt, und um in diesem Fall dem Hauptrotor (2) eine Hilfsleistung $W_e$ durch die elektrische Maschine (12) zuzuführen, was es somit erlaubt, den Piloten des Luftfahrzeugs (1) während der Autorotationsflugphase infolge des Ausfalls beim Lenken des Luftfahrzeugs (1) zu unterstützen.

**17.** Luftfahrzeug (1) nach einem der Ansprüche 13 bis 16,
**dadurch gekennzeichnet, dass** das Luftfahrzeug ein Anzeigemittel (18) aufweist zum Anzeigen einer Information (21) bezüglich der verfügbaren Hilfsleistung $W_e$ sowie einer Anzeige (22), die darüber informiert, ob die Vorrichtung (10) betriebsbereit ist.

**Claims**

**1.** Method for assisting a pilot of a rotary wing aircraft (1) during a phase of flight in autorotation, said aircraft (1) comprising:

- a hybrid power plant (5) provided with a single thermal engine (13), at least one electric machine (12) and a main power transmission gearbox (11),
- at least one electrical energy storage means (14) and
- at least one main rotor (2) driven, in flight, at a nominal speed of rotation $Nr_N$ by said hybrid power plant (5),

**characterised in that**

- during a monitoring step (20), a monitoring parameter of said aircraft (1) is measured during a flight in order to detect a possible failure of said thermal engine (13),
- when a failure of said thermal engine (13) is detected, said electric machine (12) is controlled to deliver auxiliary

power $W_e$ to said main rotor (2), thus making it possible to assist said pilot of said aircraft (1), during the entry into the phase of flight in autorotation following said failure to manoeuvre said aircraft (1).

2. Method according to claim 1,
**characterised in that**, said aircraft (1) having a first measurement means (3) for measuring an instantaneous speed of rotation $Nr$ of said main rotor (2), said instantaneous speed of rotation $Nr$ is measured during said monitoring step (20) in order to evaluate a drop in power of said main rotor (2) representative of said failure of said thermal engine (13).

3. Method according to claim 2,
**characterised in that** a derivative $\frac{dNr}{dt}$ of said instantaneous speed of rotation $Nr$ is determined during said monitoring step.

4. Method according to claim 3,
**characterised in that** it is considered that said thermal engine (13) has failed when a check power $W_C$ is positive, said check power $W_C$ being obtained according to the following first relationship:

$$W_C = \frac{W_{max}}{Nr_{t1}-Nr_{t2}}\left(Nr + k\frac{dNr}{dt} - Nr_{t2}\right),$$ $W_{max}$ being the maximum power that can be delivered by said electric machine (12), $Nr$ being said instantaneous speed of rotation of said main rotor (2), $\frac{dNr}{dt}$ being the derivative of said instantaneous speed of rotation $Nr$, $Nr_{t1}$, $Nr_{t2}$ and $k$ being positive coefficients that depend on said aircraft (1), $Nr_{t1}$ being less than $Nr_{t2}$.

5. Method according to claim 4,
**characterised in that**, said coefficient $Nr_{t1}$ is comprised between 82.5% and 88% of the nominal speed of rotation $Nr_N$ and said coefficient $Nr_{t2}$ is comprised between 93% and 98.5% of the nominal speed of rotation $Nr_N$.

6. Method according to claim 1,
**characterised in that**, said thermal engine (13) being a turboengine having a second measurement means for measuring an instantaneous speed of rotation NG of a compression turbine of said turboengine, it is considered that said thermal engine (13) has failed when a check power $W_C$ is positive, said check power $W_C$ being obtained according to the following second relationship:

$$W_C = \frac{W_{max}}{NG_{t1}-NG_{t2}}\left(NG + k'\frac{dNG}{dt} - NG_{t2}\right),$$ $W_{max}$ being the maximum power that can be delivered by said electric machine (12), $NG$ being said instantaneous speed of rotation of said compression turbine, $\frac{dNG}{dt}$ being the derivative of said instantaneous speed of rotation $NG$, $NG_{t1}$, $NG_{t2}$ and k' being positive coefficients depending on said aircraft (1), $NG_{t1}$ being less than $NG_{t2}$.

7. Method according to claim 1,
**characterised in that**, said aircraft (1) having a third measurement means (6) measuring an output torque of said thermal engine (13), during said monitoring step (20), said torque is measured in order to evaluate a drop in power of said thermal engine (13) representative of said failure of said thermal engine (13).

8. Method according to any one of claims 4 to 7,
**characterised in that** said auxiliary power $W_e$ is equal to said check power $W_C$ when said check power $W_C$ is less than said maximum power $W_{max}$ and said auxiliary power $W_e$ is equal to said maximum power $W_{max}$ when said check power $W_c$ is greater than or equal to said maximum power $W_{max}$.

9. Method according to any one of claims 1 to 8,
**characterised in that**, said aircraft (1) having a display means (18), there is displayed on said display means (18) information (21) relating to said available auxiliary power $W_e$ together with an indication (22) informing whether said method is operational.

**10.** Method according to claim 9,
**characterised in that** said information (21) is the remaining utilisation time of said auxiliary power $W_e$ at the maximum power $W_{max}$ that can be delivered by said electric machine (12).

**11.** Method according to any one of claims 1 to 10,
**characterised in that** said method is operational only while said aircraft (1) is in flight, an information means (7) indicating that said aircraft (1) has taken off.

**12.** Method according to any one of claims 1 to 11,
**characterised in that** said method is operational only when said aircraft (1) is below a predetermined height above the ground.

**13.** Rotary wing aircraft (1) comprising:

- a device (10) for assisting a pilot of said aircraft (1) during a phase of flight in autorotation provided:

  • with a hybrid power plant (5) comprising a single thermal engine (13), at least one electric machine (12) and a main power transmission gearbox (11),
  • with at least one storage means (14) for storing electrical energy, and
  • with a control means (15) for controlling said electric machine (12) provided with a memory (16),

- at least one main rotor (2) driven in rotation by said hybrid power plant (5) and rotating at an instantaneous speed of rotation $Nr$,

**characterised in that** the aircraft (1) comprises a monitoring means for monitoring a monitoring parameter of said aircraft (1) in order to detect a possible failure of said thermal engine (13), said control means (15) communicating with said monitoring means and said electric machine (12) in order to perform the method according to claims 1 to 12.

**14.** Aircraft (1) according to claim 13,
**characterised in that** said monitoring means comprises a measurement means for evaluating a drop in power of said main rotor (2).

**15.** Aircraft (1) according to claim 13,
**characterised in that** said monitoring means comprises a first measurement means (3) for measuring said instantaneous speed of rotation $Nr$ in order to evaluate a drop in power of said main rotor (2).

**16.** Aircraft (1) according to any one of claims 13 to 15,
**characterised in that** said control means comprises a calculation unit and a memory, said calculation unit executing instructions stored in said memory in order to determine whether there is a failure of said thermal engine (13), and then to cause said electric machine (12), where appropriate, to deliver auxiliary power $W_e$ to said main rotor (2), thus making it possible to assist said pilot of said aircraft (1), during said phase of flight in autorotation following said failure, to manoeuvre said aircraft (1).

**17.** Aircraft (1) according to any one of claims 13 to 16,
**characterised in that** said aircraft comprises a display means (18) for displaying information (21) relating to said available auxiliary power $W_e$ together with an indication (22) informing whether said device (10) is operational.

Fig.1

20

30

Fig.2

2

4

10

3

17

5

19    11

18

13         12

15

7

6    14

16

1

21    22    18

10 s.

23

Fig.3

$$\frac{dNr}{dt}$$

Fig.4

Fig.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2952907
- EP 2327625 A
- FR 2962404
- EP 2148066 A
- US 20090145998 A
- WO 2010123601 A
- FR 2916418